# EUROPEAN PATENT APPLICATION

(11) **EP 4 624 320 A1**
(43) Date of publication of application: **01.10.2025**
(21) Application number: 25155210.5
(22) Date of filing: 31.01.2025
(51) Int. Cl.: B64C 1/14, B64D 45/00, E05B 65/00

(54) **DOOR ASSEMBLY WITH AN ENGAGEMENT MECHANISM**

(30) Priority: 28.03.2024 US 202418619653
(71) Applicant: The Boeing Company, Arlington, VA 22202 (US); Harper Engineering Company, Renton, Washington 98057 (US)
(72) Inventor: RHYNARD, Steven Ellis, ARLINGTON, 22202 (US); CHADWELL, David Lee, RENTON, 98057 (US)
(74) Representative: Plasseraud IP

(57) **Abstract**

A door assembly configured to be mounted in an opening (113) and configured to control movement of persons through the opening. The door assembly includes a door (20) within pivoting first and second panels (23a, 23b). A lever (41) is mounted to the second panel and is movable between a first lateral position with an end extending outward from the inner edge of the second panel and a second lateral position that is laterally offset from the first lateral position. A plunger (42) is mounted to the second panel and is movable between a first vertical position with the plunger end disengaged from the opening and a second lateral position with the plunger end extending outward from the second panel and engaged with the opening. A gear assembly (43) is configured to move the plunger to the first vertical position when the lever is in the first horizontal position and to move the plunger to the second vertical position when the lever is in the second horizontal position.

## Description

### TECHNOLOGICAL FIELD

The present disclosure relates generally to the field of aircraft and, more specifically, to a door assembly with an engagement mechanism to secure the door in a closed position.

### BACKGROUND

Aircraft have a flight deck that includes flight instruments, instrument panels, and various controls that enable the flight crew to operate the aircraft. The flight deck is positioned towards the front of the aircraft and is usually a separate compartment away from the cabin area. A flight deck door further secures the flight deck and when closed isolates the flight deck from the cabin area.

The flight deck door is closed and locked during flight. This allows the flight crew to concentrate on operating the aircraft and prevents entry of unauthorized persons onto the flight deck. However, the flight deck door may be opened during flight for various reasons. One occurrence is when one of the flight crew use the lavatory which is located in the cabin area of the aircraft. Other occurrences include but are not limited to when food and/or drinks that are prepared in the galley of the cabin area are delivered to the flight crew on the flight deck, and when flight crew leave the flight deck during a break.

Opening of the flight deck door could present an opportunity for an un-authorized person to gain entry to the flight deck. A physically installed system is needed that would inhibit and/or sufficiently delay a person in the cabin area from reaching the flight deck door when the flight deck door is open. The delay in their movement towards the flight deck would allow the flight deck door to be closed and locked prior to the person reaching the door.

### SUMMARY

One aspect is directed to a door assembly configured to be mounted in an opening and configured to control movement of persons through the opening. The door assembly is defined according to claim 1.

Another aspect is directed to a method of operating a door assembly in an opening. The method is defined according to claim 13.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an example isometric view of an aircraft.
Figure 2 is an example top schematic view of an interior of an aircraft with a barrier door positioned within an opening.
Figures 3A-3C are examples front views of a barrier door moving from a folded configuration in a stowed position to an extended configuration in a deployed position.
Figure 4 is an example schematic side view of an engagement mechanism mounted to a door.
Figure 5A is an example schematic top view of panels in a folded configuration and with a lever in a first position (open position).
Figure 5B is an example schematic top view of the panels of Figure 5A in an extended configuration and with the lever in a second position (closed position).
Figure 6 is an example front schematic view of an engagement mechanism having a pair of plungers and a pair of gear assemblies.
Figure 7A is an example front view of a front side of a housing.
Figure 7B is an example rear view of a rear side of the housing of Figure 7A.
Figure 8 is an example front schematic view of a barrier door mounted directly into an opening.
Figure 9 is an example front schematic view of a barrier door assembly that includes a frame and configured to be mounted in an opening.
Figure 10 is an example side view of a plunger extending outward from a bottom side of a door.
Figure 11 is an example flowchart diagram of a method of operating a door of a door assembly in an opening.
Figure 12 is an example front schematic view of an engagement mechanism with a lever mounted on a front side of a panel.

### DETAILED DESCRIPTION

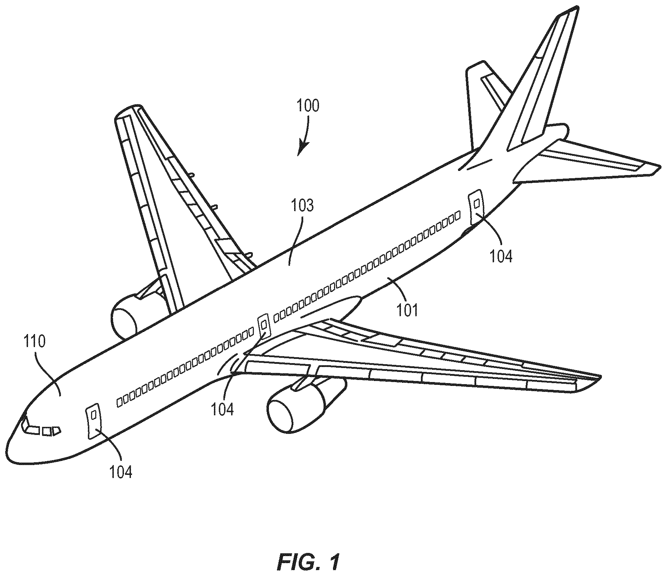

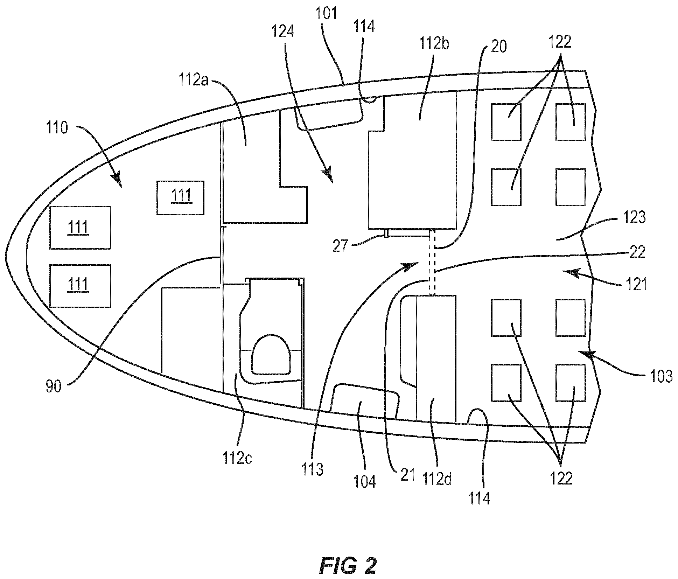

Figures 1 and 2 illustrate an aircraft 100 configured to transport passengers. The aircraft 100 includes a fuselage 101 with a flight deck 110 positioned at the front and a cabin area 103 positioned rearward. The cabin area 103 is equipped for accommodating the passengers. The size of the flight deck 110 and the cabin area 103 can vary depending upon the aircraft 100. One or more exterior doors 104 provide for passengers and the flight crew to enter and exit the fuselage 101.

The flight deck 110 includes one or more seats 111 for flight crew including but not limited to the pilot and co-pilot. Various controls and instrument panels (not illustrated) are located for use by the flight crew to control the aircraft 100. A flight deck door 90 separates the flight deck 110 from the cabin area 103. The flight deck door 90 prevents unauthorized persons from entering the flight deck 110 from the cabin area 103. The flight deck door 90 can include a lock to be secured in the closed position.

Monuments 112 are mounted to the structural members of the aircraft 100 within the fuselage 101. The monuments 112 are shaped and sized for a function with examples including but not limited to galleys, lavatories, walls, and stowage units. In some examples, the monuments 112 are shaped and sized to extend from the floor to the ceiling of the cabin area 103, and between a wall 114 of the fuselage 101 to an aisle 123.

The cabin area 103 is positioned along the fuselage 101 rearward of the flight deck 110. The cabin area 103 includes a crew section 124 and a passenger section 121. The crew section 124 is positioned immediately aft of the flight deck 110. In some examples, the crew section 124 is positioned at one of the exterior doors 104 and includes space to allow for passengers to enter and exit the aircraft 100. Additionally or alternatively, the crew section 124 provides an area for the flight crew such as flight attendants to sit during takeoff and landing, for the flight crew to prepare food/drinks, and for passengers to access a lavatory. Figure 2 includes the crew section 124 having a pair of galley monuments 112a, 112b, a lavatory monument 112c, and a stowage monument 112d.

In the example of Figure 2, the passenger section 121 is positioned aft of the crew section 124. The passenger section 121 is configured to accommodate the passengers and includes seats 122 arranged in rows along one or more aisles 123. In some examples such as a commercial airline, the seats 122 extend throughout the passenger section 121.

The cabin area 103 can include a wide variety of configurations. In some examples the aircraft 100 is used to transport cargo and includes a limited number of seats 122 in the cabin area 103. In some examples the cabin area 103 does not include a crew section 124 with the passenger section 121 including the seats 122 extending directly behind the flight deck 110.

One or more openings 113 form walkways for passengers and flight crew to move within the cabin area 103. In some examples as illustrated in Figure 2, the openings 113 are formed between the monuments 112. Figure 2 illustrates a layout with an opening 113 formed between opposing monuments 112b, 112d. Other examples include openings 113 formed between various components, such as monuments 112, walls 114, and seats 122.

A barrier door 20 extends across the opening 113 to delay and/or prevent a passenger in the passenger section 121 from moving through an opening 113 and gaining access to the flight deck 110. The barrier door 20 is movable between a stowed position (e.g., folded configuration shown in solid lines in Figure 2) and a deployed position (e.g., extended configuration) across the opening 113 (shown in dashed lines in Figure 2). In the stowed position, the barrier door 20 is folded and positioned in a frame 27. This allows for persons to move through the opening 113 such as during boarding and deplaning. In the deployed position, the barrier door 20 is in an extended configuration that extends across the opening 113. This prevents and/or delays a person in the passenger section 121 from moving through the opening 113 and gaining access to the flight deck 110.

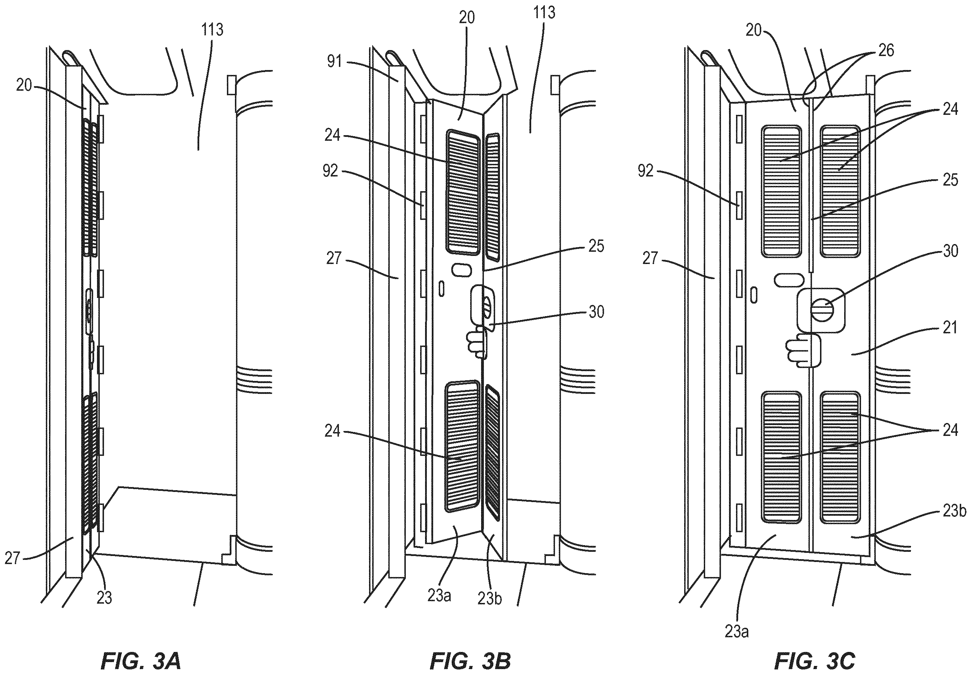

The barrier door 20 is constructed from panels 23 (e.g., a first panel 23a and a second panel 23b) that are hingedly connected together. The number and configuration of the panels 23 can vary. Figures 3A, 3B, and 3C illustrate the barrier door 20 moving from a stowed position (Figure 3A), to a partially deployed position (Figure 3B) to a deployed position (Figure 3C). In the stowed position (Figure 3A) the panels 23 are folded together and out of the opening 113. The panels 23 may be completely out of the opening 113 such as within the frame 27 or folded and stored at one side of the opening 113. In the deployed position (Figure 3C), the panels 23 are unfolded to extend across the opening 113.

The panels 23 are constructed from a rigid material (e.g., composite material, plastic) and have a fixed shape. The panels 23 can include various shapes and sizes including substantially rectangular as shown. In some examples as illustrated in Figure 3C, the panels 23 are sized to extend across the entire opening 113 such that there are no gaps when in the deployed position. In other examples, one or more small gaps are formed along the outer edges of the panels 23. In some examples, the panels 23 have the same shape and size to completely overlap in the folded configuration. In other examples the panels 23 include different shapes and/or sizes. One or more windows 24 can be positioned on one or both panels 23. The windows 24 include bars, protective transparent material, or other structures to prevent a passenger from crawling through when the barrier door 20 is closed.

The barrier door 20 may include one or more hinges 25 to enable pivoting movement of the panels 23. In the example best shown in Figures 3B and 3C, the panels 23 are connected by a hinge 25 that is positioned at the inner edges 26 (e.g., inner edge 26a and inner edge 26b). The hinge 25 can extend along a single continuous section of the inner edges 26 or can include two or more discrete sections. In some examples, the hinge 25 provides for the panels 23 to be parallel in the folded configuration. This minimizes the overall size of the barrier door 20 when in the stowed position to provide for persons to pass through the opening 113. In some examples, the hinge 25 aligns the panels 23 in a coplanar position in the extended configuration to extend across the opening 113. In other examples the panels 23 are positioned at different relative angular positions in the folded and extended configurations. The hinge 25 can include various configurations, including but not limited to a piano hinge.

In the deployed position (extended configuration), the barrier door 20 includes a front side 21 (i.e., crew side) that faces forward into the crew section 124 and towards the flight deck 110. The barrier door 20 also includes a rear side 22 (i.e., passenger side) that faces rearward towards the passenger section 121. In some examples, the barrier door 20 is mounted in the opening on a hinge 92. In some examples, the hinge 92 and one or more hinges 25 are positioned on the front side 21 of the barrier door 20 (i.e., in the crew section 124). This allows the barrier door 20 to more effectively resist loads applied from the passenger section 121 toward the flight deck 110.

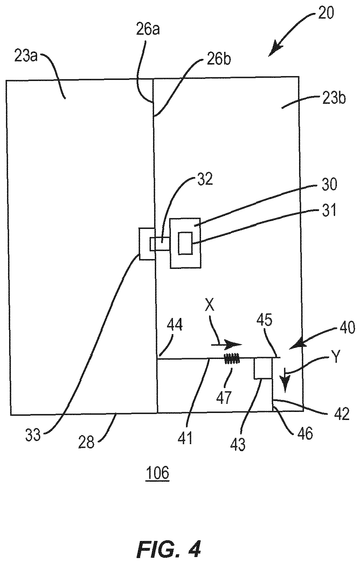

In some examples, a lock 30 secures the door in the deployed position. As illustrated in Figure 4 the lock 30 is mounted to one or more of the panels 23. In some examples, the barrier door 20 comprises a lower edge 28 situated on the bottom side of the barrier door 20. That is, the one or more panels 23 comprise the lower edge(s) 28 situated on the bottom side of the respective panels 23. In some examples, each panel 23 comprises the lower edge 28. The lock 30 may include a handle 31 and a bolt 32. The panel 23 that does not include the bolt 32 includes a receptacle 33 in the inner edge 26. Rotation of the handle 31 in a first direction causes the bolt 32 to move in the direction or arrow X to a retracted position away from the adjacent panel 23. This unlocked position enables the panels 23 to pivot relative to each other for the barrier door 20 to move between the folded and extended configurations. Rotation of the handle 31 in a second direction causes the bolt 32 to move to an extended position outward from the panel 23. When the barrier door 20 is in the extended configuration across the opening 113, this rotation causes the bolt 32 to move into the receptacle 33. This secures or locks the two panels 23 together prevent relative pivoting movement and securing the barrier door 20 in the extended configuration across the opening 113.

In some examples, the handle 31 includes a first handle on the front side 21 of the barrier door 20 and a second handle on the rear side 22. This provides for access by both of the crew member in the crew section 124 and a passenger in the passenger section 121. In other examples, the handle 31 includes a single handle on the front side 21.

The barrier door 20 is equipped with an engagement mechanism 40. The engagement mechanism 40 includes a lever 41, a plunger 42, and a gear assembly 43. The engagement mechanism 40 functions to further secure the barrier door 20 in the deployed position across the opening 113. The engagement mechanism 40 is configured to move in the direction of arrow Y to a locked position when the panels 23 align in the extended configuration and move to the unlocked position when the panels are in the folded configuration.

The lever 41 includes an elongated shape (e.g., substantially straight/linear shape) with a first end 44 and opposing second end 45. In some examples, the lever 41 is single elongated piece such as a rod. Other examples include the lever 41 constructed from multiple sections. The lever 41 is constructed from various materials, such as metal, wood, and rigid plastic. In one example, the lever 41 is mounted within the interior of the panel 23 (e.g., panel 23b in Figure 4). In some examples, the lever 41 is positioned in an interior space 49 of the panel 23 that is formed between a front side and a rear side of the panel (also referred front side 21 and rear side 22 of the barrier door 20). An end of the lever 41 extends outward from the interior space which positions the lever 41 for contact by the opposing panel 23 (e.g., panel 23a in Figure 4). Positioning the lever 41 in the interior space also protects the lever 41 from tampering and/or being damaged as persons walk through the opening 113. The lever 41 can be positioned at different locations along the height of the barrier door 20. Figure 4 illustrates an example with the engagement mechanism 40 positioned in a lower section below the lock 30. In other examples, the lever 41 is positioned at an upper section of the barrier door 20.

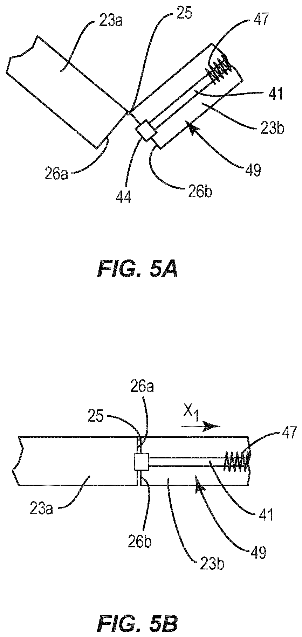

As for the barrier door 20, the panel 23 comprises the front side 21, the rear side 22, and the interior space 49. The lever 41 is movable relative to panel 23 to which it is mounted. In a first position (e.g., open position), the lever 41 extends partially outward from an inner edge 26 of the panel 23 (e.g., the inner edge 26b of the second panel 23b). In a second position (e.g., closed position), the lever 41 is shifted inward relative to the panel 23 (e.g., panel 23b). Figure 5A illustrates the barrier door 20 in the folded/partially folded configuration with the lever 41 mounted within the interior space 49 of the panel 23b. The lever 41 is in this first position when the panels 23 are in a folded position such as either a partially folded position or a fully folded position. The lever 41 is positioned relative to the panel 23b with the first end 44 extending outward from the inner edge 26b. In the folded configuration of the barrier door 20, the opposing panel 23a is positioned with its inner edge 26a spaced away from the lever 41.

In some examples, a spring 47 acts on the lever 41 and biases it towards the first position with the first end 44 extending outward beyond the inner edge 26b. In some examples, the first end 44 extends outward through an opening in the inner edge 26b. The lever 41 includes a flange (not illustrated) that contacts against the inner edge 26b to control the extent to which the first end 44 can extend outward.

Figure 5B illustrates the barrier door 20 in the extended configuration with the panels 23a, 23b aligned in a coplanar arrangement. The inner edge 26a of (first) panel 23a contacts against the first end 44. This contact forces the lever 41 to move to the second position inward within the panel 23b. The movement of the lever 41 coincides with the folding movement of the panels 23a, 23b as the force of the panel 23a acting on the lever 41 applies a driving force that moves the lever 41 to the second position.

The plunger 42 includes an elongated shape (e.g., substantially straight/linear shape) and extends between the lever 41 and the lower edge 28 of the barrier door 20. The plunger 42 is also movable relative to the panel 23. In a first position (e.g., retracted position), the plunger 42 is positioned with an engagement end (a plunger end) 46 disengaged from the opening 113. This can include the end 46 fully retracted within the panel 23 (e.g., panel 23b) or extending outward a limited amount so as not to engage. In a second position (e.g., extended position), the plunger 42 is shifted outward for the end 46 to extend outward and engage with the opening 113. The plunger 42 has a rigid construction and can include various materials including but not limited to metal, wood, and plastic. The plunger 42 can be constructed from one or more sections.

In some examples, each of the lever 41 and plunger 42 are substantially straight, meaning that the lever 41 and plunger 42 are primarily linear in form (e.g., linear shape), allowing for efficient and predictable movement. The lever 41 is configured to move laterally relative to the panel 23 without unnecessary friction or deviation from its intended path. Similarly, the plunger 42 is configured to move vertically relative to the panel 23. In some examples, the lever 41 is aligned substantially perpendicular to the plunger 42, optimizing the transfer of motion from lateral to vertical through the gear assembly 43. In other examples, the alignment is non-perpendicular, depending on specific design requirements or constraints.

The gear assembly 43 connects to both the lever 41 and the plunger 42. The gear assembly 43 is configured to drive the plunger 42 between the positions based on the movement of the lever 41. In some examples, the gear assembly 43 includes a rack and pinion gear system. In one example, each of the lever 41 and plunger 42 include a toothed rack. A gear is positioned adj acent to and engages with both racks. Movement of the lever 41 causes the gear to rotate which in turn causes movement of the plunger 42. Movement of the lever 41 in a first direction, cause the plunger 42 to move in a first direction (e.g., to extend outward from the edge 28 of the barrier door 20). Movement in an opposing second direction causes the plunger 42 to move in a second direction (e.g., to retract inward from the edge 28 of the barrier door 20).

In another example, the gear assembly 43 includes mating gears positioned on the lever 41 and plunger 42. The plunger 42 is threaded and extends through a central opening in a gear that is connected to the lever 41. Movement of the lever 41 causes the gear to rotate which in turn causes the plunger 42 to move due to the threading of the gear moving along the length of the plunger 42. Other examples of transferring movement of the lever 41 to movement of the plunger 42 include but are not limited to gearless linkage mechanisms or cranks such as bell cranks, or cable-operated mechanisms.

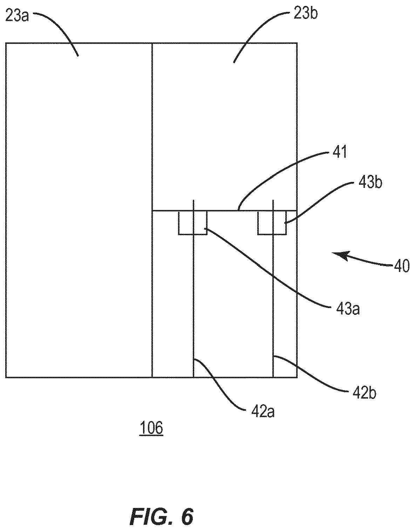

In some examples as illustrated in Figure 4, the engagement mechanism 40 includes a single plunger 42. In other examples, the engagement mechanism 40 includes multiple plungers 42a and 42b. Figure 6 illustrates an example having a pair of plungers 42a, 42b each connected to the lever 41 through a respective gear assembly 43a, 43b. Movement of the lever 41 is transferred to the plungers 42a, 42b through the respective gear assembly 43a, 43b. In engagement mechanisms 40 having multiple plungers 42, the different plungers 42 and gear assemblies 43 can be the same or different. Further, the multiple plungers 42 can be positioned in close proximity along the bottom edge (e.g., the lower edge 28) of the panel 23 or can be spaced apart.

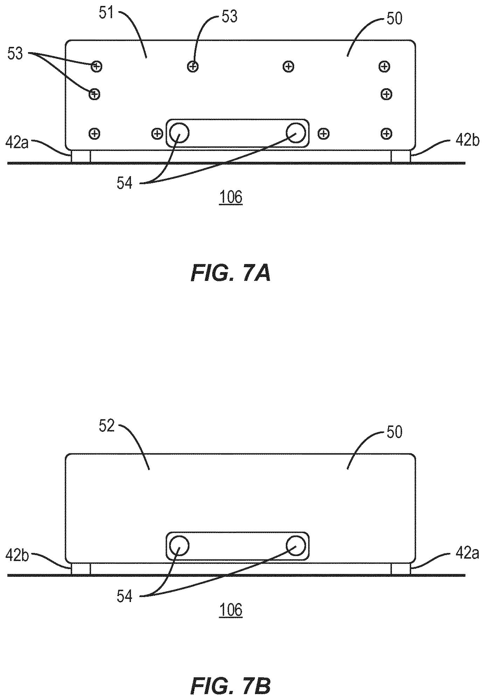

In some examples, the engagement mechanism 40 includes a housing 50 configured to be mounted at the bottom edge (e.g., the lower edge 28) of the barrier door 20. Figures 7A and 7B illustrate a housing 50 that includes a front section 51 and a rear section 52. The housing 50 is mounted to the barrier door 20 through anchors 53. In some examples, the anchors 53 are inserted from just the front side 21 of the barrier door 20 to prevent tampering by a passenger.

Fasteners 54 secure together the front section 51 and the rear section 52. The fasteners 54 include a threaded section and a head. In the event the engagement mechanism 40 becomes stuck in the engaged position (e.g., extended position of the plunger(s) 42), a crew member from the front side 21 or a passenger from the rear side 22 of the barrier door 20 can unscrew the fasteners 54 and access the one or more plungers 42. The one or more plungers 42 can be moved from the engaged position (e.g., extended position) to the disengaged position (e.g., retracted position) to enable the barrier door 20 to be opened. Each of the fasteners 54 is threaded which results in a delay in opening the housing 50 and disengaging the one or more plungers 42. This delay prevents a passenger from quickly bypassing the engagement mechanism 40 and immediately opening the barrier door 20. The time necessary for a passenger to unscrew the fasteners 54 and disengage the one or more plungers 42 provides time for crew members to move to the flight deck 110 and close and lock the flight deck door 90.

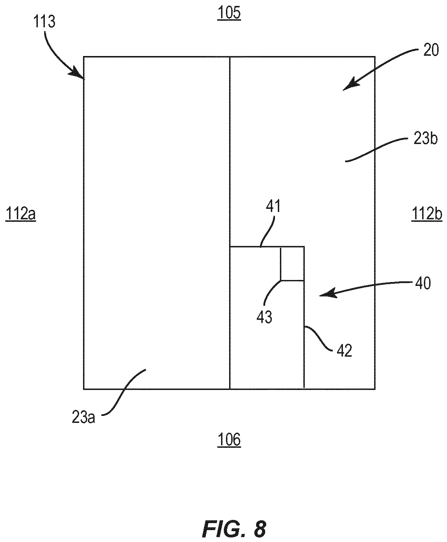

The barrier door 20 may be mounted in the opening 113 in a variety of different manners. Figure 8 includes an example with the barrier door 20 mounted to the floor 106 at the opening 113. In some examples, the barrier door 20 is also mounted to the ceiling 105. The barrier door 20 is not mounted to the lateral sides formed by monuments 112a, 112b. The plunger 42 of the engagement mechanism 40 extends outward to engage with the floor 106.

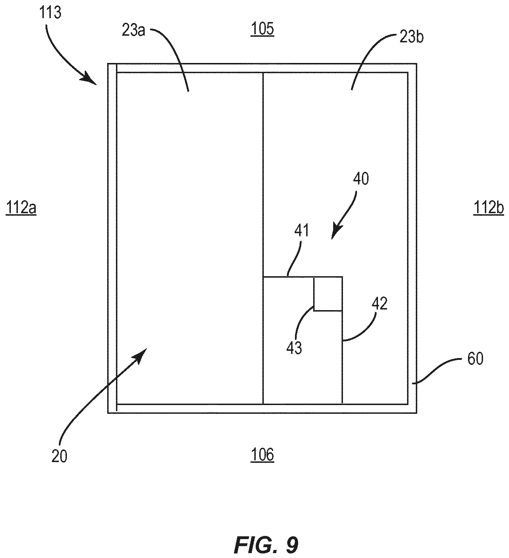

In some examples, the barrier door 20 is mounted to a frame 60 (Figure 9). The frame 60 is configured to mount to one or more of the floor 106, ceiling 105, and lateral sides of the opening 113. The frame 60 can extend completely or partially around the barrier door 20. Figure 9 illustrates an example with the frame 60 extending completely around the barrier door 20.

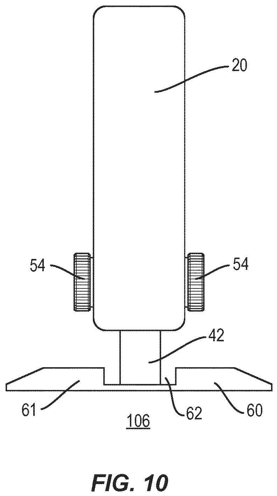

In some examples, the frame 60 includes a threshold 61 configured to be mounted to the floor 106. As illustrated in Figure 10, the threshold 61 includes one or more receptacles 62 that receive the one or more plungers 42 in the engaged position (e.g., extended position). Ther receptacles 62 include sidewalls that prevent the plunger 42 from escaping while in the deployed position (e.g., engaged/extended position). In one example as illustrated in Figure 10, the sidewalls have straight sidewalls. In another example, the sidewalls have a dovetail configuration. In some examples, the frame 60 includes just a threshold 61. In other examples, the frame 60 includes the threshold 61 that extends along the bottom of the barrier door 20 and one or more sections that extend along at least one of the lateral sides and the top side of the barrier door 20.

In other examples, the barrier door 20 is mounted to one or more of the monuments 112.

In some examples, the barrier door 20 is positioned completely out of the opening 113 when stowed in the folded configuration. This protects the panels 23 from being damaged such as by being hit by luggage carried by passengers, galley carts being pushed through the opening 113, and persons as they walk through the opening 113. In other examples, the barrier door 20 is at least partially within the opening 113 in the stowed position.

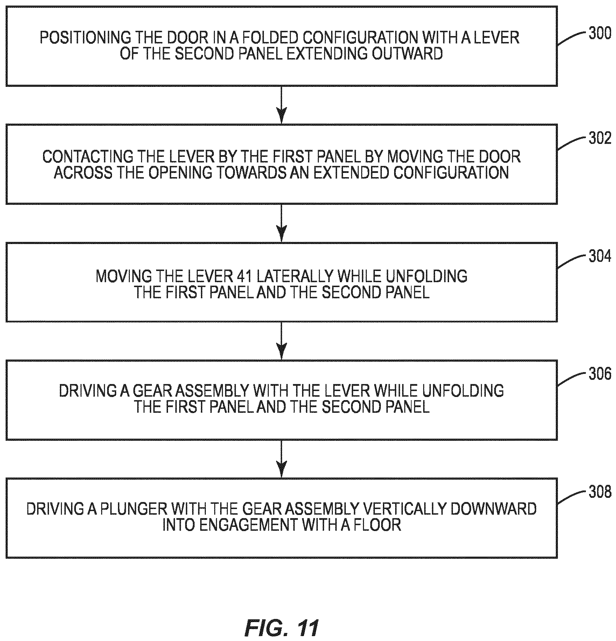

Figure 11 illustrates a method of operating a door 20 (e.g., the door 20 of the door assembly described above) in an opening 113. The method includes positioning the door 20 in a folded configuration with a first panel 23a and a second panel 23b folded together (block 300). A lever 41 of the second panel 23b extends outward from the inner edge 26b of the second panel 23b. The lever 41 is contacted by the first panel 23a by moving the door 20 across the opening 113 towards the extended configuration (block 302). The lever 41 is moved laterally relative to the second panel 23b while unfolding the first panel 23a and the second panel 23b (block 304). A gear assembly 43 is driven with the lever 41 while unfolding the first panel 23a and the second panel 23b (block 306). The plunger 42 is driven with the gear assembly 43 vertically downward into engagement with the floor 106 of the opening 113 (block 308).

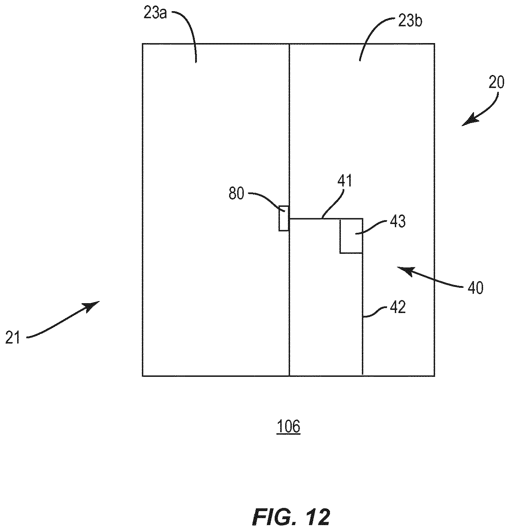

In some examples as illustrated in Figures 5A and 5B, the lever 41, plunger 42, and gear assembly 43 are positioned within the interior space 49 of the panel 23 (e.g., panel 23b). In other examples, the plunger 42 is mounted to the front side 21 of the panel 23. As illustrated in Figure 12, the lever 41 is exposed on the front side 21 of the (second) panel 23b. A contact member 80 is mounted to the front side 21 of the adjacent (first) panel 23a. The contact member 80 contacts against the (first) end 44 of the lever 41 when moving the panels 23 to the extended configuration. This contact drives the lever 41 laterally relative to the panel 23b to drive the gear assembly 43 and plunger 42. In some examples, the plunger 42 and gear assembly 43 are also mounted on the front side 21 of the panel 23b. In other examples, one or both of the plunger 42 and gear assembly 43 are mounted within the panel 23b.

In some examples, the barrier door 20 includes the lock 30 to engage the panels 23 and prevent their movement between the folded and extended configurations. In other examples, the barrier door 20 does not include the lock 30. The barrier door 20 is maintained in the extended configuration by the engagement mechanism 40.

In one example as illustrated in Figure 4, the lever 41 extends outward from the lateral side of the panel 23 and the plunger 42 extends outward from the bottom side of the panel 23. In other examples, one or both of the lever 41 and plunger 42 extend outward from different sides of the panel 23. In one specific example, the plunger 42 extends outward from a top side of the panel 23 and engages with a top of the opening 113. In another example, the plunger 42 extends outward from the outer lateral side of the panel 23.

One application of the engagement mechanism 40 is for a barrier door 20 for use in an aircraft 100. The engagement mechanism 40 can be used in other applications in which a door 20 is secured in a locked position across the opening 113. Examples include but are not limited to other openings within an aircraft, a door within a building, and an exterior door.

The barrier door 20 includes multiple panels 23 that may be connected together by the hinges 25. In some examples, the barrier door 20 includes two panels (23a and 23b) that are connected along inner edges (26a, 26b) by the hinge 25. In other examples, the barrier door 20 includes three or more panels 23 that are connected by hinges 25.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A door assembly configured to be mounted in an opening (113) and configured to control movement of persons through the opening (113), the door assembly comprising:
a door (20) comprising a first panel (23a) and a second panel (23b) that are pivotally connected together at inner edges (26, 26a, 26b), the door (20) is movable between a folded configuration to enable the movement of persons through the opening (113) and an extended configuration to extend across the opening (113) to prevent the movement of persons through the opening (113);
a lever (41) mounted to the second panel (23b) and configured to move between an open position with a first end (44) extending outward beyond the inner edge (26b) of the second panel (23b) and a closed position with the first end (44) within the inner edge (26b) of the second panel (23b);
a plunger (42) mounted to the second panel (23b) and comprising a plunger end (46) positioned at a lower edge (28) of the second panel (23b), the plunger (42) movable relative to the second panel (23b) between a retracted position and an extended position;
a gear assembly (43) mounted to the lever (41) and the plunger (42) and configured to move the plunger (42) based on movement of the lever (41);
wherein in the folded configuration of the door (20), the first end (44) of the lever (41) extends outward beyond the inner edge (26b) of the second panel (23b) and the plunger (42) is in the retracted position; and
wherein in the extended configuration of the door (20), the first end (44) of the lever (41) is forced inward into the second panel (23b) by contact with the first panel (23a) and the plunger (42) is in the extended position to be engaged at the opening (113).

2. The door assembly of claim 1, wherein the second panel (23b) comprises a front side (21), a rear side (22), and an interior space (49) formed between the front side (21) and the rear side (22) with the lever (41), the plunger (42), and the gear assembly (43) positioned within the interior space (49).

3. The door assembly of claim 1 or 2, wherein the first end (44) of the lever (41) is positioned along a lateral side of the second panel (23b) and the plunger end (46) of the plunger (42) is positioned at a bottom side of the second panel (23b).

4. The door assembly of any one of claims 1 to 3, wherein each of the lever (41) and the plunger (42) is configured to be substantially straight in shape, and wherein the lever (41) is positioned perpendicular to the plunger (42).

5. The door assembly of any one of claims 1 to 4, wherein the inner edge (26a) of the first panel (23a) and the inner edge (26b) of the second panel (23b) contact together in the extended configuration of the door (20).

6. The door assembly of any one of claims 1 to 5, wherein the lever (41) is mounted to the second panel (23b) to move horizontally relative to the second panel (23b) and the plunger (42) is mounted to the second panel (23b) to move vertically relative to the second panel (23b).

7. The door assembly of any one of claims 1 to 6, further comprising a spring (47) connected to the lever (41) to bias the lever (41) outward from the inner edge (26b) of the second panel (23b).

8. The door assembly of any one of claims 1 to 7, wherein the plunger (42) is a first plunger (42a) and the gear assembly (43) is a first gear assembly (43a), the door assembly further comprising:
a second plunger (42b) mounted to the second panel (23b) away from the first plunger (42a) and movable relative to the second panel (23b) between the retracted position and the extended position and a second gear assembly (43b) is mounted to the second panel (23b) and configured to move the second plunger (42b) between the retracted position and the extended position based on movement of the lever (41).

9. The door assembly of any one of claims 1 to 8, further comprising a hinge (25) that pivotally connects the first panel (23a) and the second panel (23b).

10. The door assembly of any one of claims 1 to 9, wherein the first end (44) of the lever (41) is positioned away from the inner edge (26a) of the first panel (23a) when the lever (41) is in the open position, and is in contact with the inner edge (26a) of the first panel (23a) when the lever (41) is in the closed position.

11. The door assembly of any one of claims 2 to 10, wherein the first end (44) of the lever (41) is positioned within the interior space (49) of the second panel (23b) in the closed position.

12. The door assembly of any one of claims 1 to 11, wherein the first end (44) of the lever (41) positioned away from the inner edge (26a) of the first panel (23a) in the folded configuration of the door (20), and in contact with the inner edge (26a) of the first panel (23a) in the extended configuration of the door (20).

13. A method of operating a door assembly according to claim 1 in an opening 113, the method comprising:
positioning the door (20) in the folded configuration with the first panel (23a) and the second panel (23b) folded together and the lever (41) of the second panel (23b) extending outward from the inner edge (26b) of the second panel (23b);
contacting the lever (41) with the first panel (23a) while moving the door (20) across the opening (113) to the extended configuration;
unfolding the first panel (23a) and the second panel (23b) and moving the lever (41) laterally relative to the second panel (23b);
driving the gear assembly (43) with the lever (41) while unfolding the first panel (23a) and the second panel (23b); and
driving the plunger (42) with the gear assembly (43) and moving the plunger (42) vertically downward into engagement with a floor (106) of the opening (113).

14. The method of claim 13, further comprising aligning the first panel (23a) and the second panel (23b) in a coplanar arrangement in the extended configuration of the door (20).

15. The method of claim 13 or 14, further comprising contacting the first end (44) of the lever (41) with the inner edge (26a) of the first panel (23a) while unfolding the first panel (23a) and the second panel (23b).
